# EUROPEAN PATENT SPECIFICATION

(11) **EP 2 634 398 B1**
(45) Date of publication and mention of the grant of the patent: **26.08.2020**
(21) Application number: 11836443.9
(22) Date of filing: 28.10.2011
(51) Int. Cl.: F02D 13/02, F02B 37/16, F02D 19/06, F02D 41/00, F02B 25/04

(54) **TWO-STROKE ENGINE**
ZWEITAKTMOTOR
MOTEUR À DEUX TEMPS

(30) Priority: 28.10.2010 JP 2010241856
(43) Date of publication of application: 04.09.2013
(73) Proprietor: IHI Corporation, Tokyo 135-8710 (JP)
(72) Inventor: UMEMOTO Yoshiyuki, Tokyo 101-0041 (JP); MORIYAMA Kouji, Tokyo 101-0041 (JP); YAMADA Takeshi, Tokyo 135-8710 (JP)
(74) Representative: TBK
(86) International application number: PCT/JP2011/074926
(87) International publication number: WO 2012/057310

(56) References cited:
- GB-A- 2 233 388
- JP-A- 3 054 352
- JP-A- 6 288 210
- JP-A- 8 144 817
- JP-A- H08 177 692
- JP-A- 2004 239 065
- JP-A- 2004 257 331
- JP-A- 2006 132 440
- JP-A- 2008 038 606
- JP-A- 2010 001 861
- US-A1- 2002 007 807
- US-B1- 7 117 830

## Description

### Technical Field

The present invention relates to a two-stroke engine.

### Background Art

As one of internal combustion engines, there is a two-stroke engine (two-cycle engine) as a reciprocating engine in which one cycle of intake, compression, combustion, and exhaust is completed in each reciprocating motion of piston inside a cylinder. In this two-stroke engine, there is a two-stroke dual-fuel engine capable of selecting either of the gas mode operation using flammable gas (gaseous fuel) as the main fuel, and the diesel mode operation using only heavy oil (liquid fuel) as the fuel thereof. In addition, hereinafter, a case in which liquefied natural gas (LNG) is used as flammable gas is described.

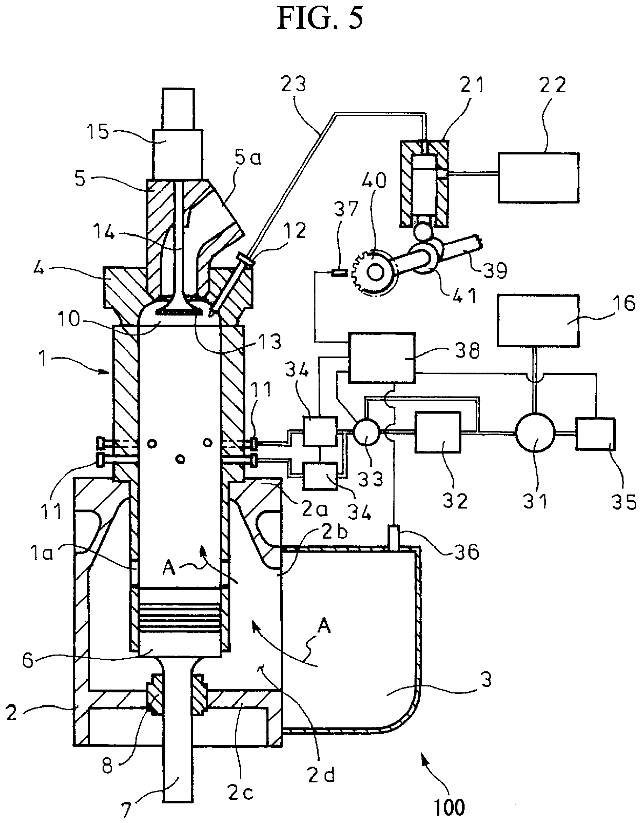

FIG. 5 is a schematic view showing an example of two-stroke dual-fuel engines in the related art. This two-stroke dual-fuel engine 100 includes a cylinder liner 1 (cylinder), a housing 2 having a hollow structure in which the upper wall 2a thereof is fitted to the middle part in the longitudinal direction of the cylinder liner 1 from the outside thereof and thereby holding the cylinder liner 1, an air-retaining part 3 attached to an opening 2b provided in the lateral of the housing 2, a cylinder cover 4 which is attached to the upper end of the cylinder liner 1 and which thereby forms a combustion chamber 10, and an exhaust valve cage 5 attached to the central part of the cylinder cover. In FIG. 5, the cylinder liner 1 is disposed so as to extend in the vertical direction.

A piston 6 is inserted in the cylinder liner 1 so as to be able to reciprocate in the vertical direction. A piston rod 7 protruding downward from the piston 6 is slidably held by a flange 2c formed in the lower part of the housing 2 through a stuffing box 8.

A plurality of scavenging ports 1a are formed in the lower end part of the cylinder liner 1 so as to penetrate the cylinder liner in the radial direction and to face a hollow section 2d of the housing 2. As shown in FIG. 5, the scavenging ports 1a are through-holes which communicate the hollow section 2d of the housing 2 and the inside of the cylinder liner 1 with each other when the piston 6 is positioned at the bottom dead center, thereby taking air A from the air-retaining part 3 into the inside of the cylinder liner 1.

A pilot injection valve 12 is attached slantingly to the cylinder cover 4, the pilot injection valve to inject liquid fuel into the combustion chamber 10 formed in the lower side of the cylinder cover. Heavy oil (liquid fuel) suctioned from a liquid fuel tank 22 by a fuel injection pump 21 is supplied to the pilot injection valve 12 through a high-pressure fuel pipe 23. The piston of the fuel injection pump 21 is driven by a fuel cam 41 rotating together with a camshaft 39.

An exhaust flow path 5a is formed in the exhaust valve cage 5, the lower end of the flow path 5a is communicated with the combustion chamber 10, and the upper end of the flow path 5a is connected to an engine exhaust flow path. An exhaust valve 13 is installed in the exhaust valve cage 5, and the upper side in the circumferential edge of the exhaust valve 13 contacts the lower end of the exhaust valve cage 5, whereby the exhaust valve 13 can close the lower end part of the exhaust flow path 5a.

An exhaust valve rod 14 protruding upward is connected to the central part of the exhaust valve 13. The exhaust valve rod 14 slidably penetrates the exhaust valve cage 5. The exhaust valve rod 14 moves up and down by an exhaust valve actuator 15, and the exhaust valve 13 closes or opens the lower end of the exhaust flow path 5a.

A plurality of gas injection valves 11 are attached to the middle part in the longitudinal direction of the cylinder liner 1, so that each injection nozzle thereof faces the center of the cylinder liner 1 and is positioned in the upper side of the scavenging ports 1a. After LNG is suctioned from an LNG tank 16 by an LNG pump 31, gaseous fuel evaporated in an evaporator 32 is supplied to each gas injection valve 11 via a pressure-regulating valve 33 and a gas controller 34. This gas controller 34 has the function of on/off controlling the supply of gaseous fuel to the gas injection valves 11. The LNG pump 31 is driven by an electric motor 35.

The two-stroke dual-fuel engine 100 shown in FIG. 5 further includes a scavenging pressure sensor 36, a crank angle detection sensor 37, and a controller 38. The scavenging pressure sensor 36 is attached to the air-retaining part 3, and detects the air pressure inside the air-retaining part 3. The crank angle detection sensor 37 is disposed so as to face a crank angle detection gear 40 attached to one end of the camshaft 39 to drive the fuel injection pump 21. The crank angle detection sensor 37 detects a crank angle from a rotational position of the crank angle detection gear 40, and outputs crank angle detection signals.

The controller 38 is configured to decide a timing of injecting gaseous fuel from the gas injection valves 11 based on the crank angle detection signals outputted from the crank angle detection sensor 37. In addition, the controller 38 is configured to control an injection start and an injection stop of gaseous fuel by sending command signals to the gas controller 34.

The controller 38 is configured to estimate the weight of the air A flowing in the cylinder liner 1, based on changes of the air pressure inside the air-retaining part 3 detected by the scavenging pressure sensor 36. In addition, the controller 38 is configured to adjust the supply of gaseous fuel supplied into the cylinder liner 1 from the gas injection valves 11 by operating the gas controller 34.

Next, a process at the gas mode operation of the two-stroke dual-fuel engine 100 shown in FIG. 5 is described below. In a state where the piston 6 is positioned at the bottom dead center, the air A which has been supplied to the air-retaining part 3 from a supercharger (not shown) is taken in the inside of the cylinder liner 1 via the hollow section 2d of the housing 2 and the scavenging ports 1a of the cylinder liner 1. At this time, the exhaust valve actuator 15 moves the exhaust valve 13 down and opens the exhaust flow path 5a, and the air A flowing in the cylinder liner 1 transfers combustion gas remaining inside the combustion chamber 10 as exhaust, to the outside through the exhaust flow path 5a.

When the piston 6 moves up and closes the scavenging ports 1a of the cylinder liner 1, the controller 38 decides a timing of injecting gaseous fuel from the gas injection valves 11 based on the crank angle detection signals outputted from the crank angle detection sensor 37, and sends command signals to the gas controller 34. Thereby, the injection of gaseous fuel by the gas injection valves 11 is started, and the air A and the gaseous fuel are mixed inside the cylinder liner 1. In addition, the exhaust valve actuator 15 moves the exhaust valve 13 up and closes the exhaust flow path 5a. The injection pressure of gaseous fuel into the cylinder liner 1 does not have to be higher because gaseous fuel is compressed in accordance with moving up of the piston 6.

When the piston 6 passes by the attachment part of the gas injection valves 11 in the cylinder liner 1, the controller 38 decides a timing of injecting gaseous fuel from the gas injection valves 11 based on the crank angle detection signals outputted from the crank angle detection sensor 37, and sends command signals to the gas controller 34. Thereby, the injection of gaseous fuel by the gas injection valves 11 is stopped.

When the piston 6 reaches the top dead center, and the mixture gas of the air A and gaseous fuel is most compressed, liquid fuel is injected into the combustion chamber 10 from the pilot injection valve 12, whereby the liquid fuel self-ignites inside the combustion chamber 10. The mixture gas of the air A and gaseous fuel is ignited and combusted by this flame. The piston 6 moves down by the explosion pressure at this time, and reaches the bottom dead center.

When the piston 6 reaches the bottom dead center, the air A which has been supplied to the air-retaining part 3 from the supercharger (not shown) is ready to be taken into the cylinder liner 1 via the hollow section 2d of the housing 2 and the scavenging ports 1a of the cylinder liner 1, and the exhaust valve actuator 15 moves the exhaust valve 13 down and opens the exhaust flow path 5a. Thereafter, the premixed combustion described above is repeated.

In the two-stroke dual-fuel engine 100 shown in FIG. 5, when the injection of gaseous fuel by the gas injection valves 11 is stopped, and only the injection of liquid fuel by the pilot injection valve 12 is carried out, the diesel mode operation is performed.

That is, when the piston 6 reaches the top dead center, and the air A is most compressed, liquid fuel is injected into the combustion chamber 10 from the pilot injection valve 12, whereby the liquid fuel self-ignites and combusts inside the combustion chamber 10, and the piston 6 moves down by the explosion pressure at this time.

A two-stroke engine according to the preamble of claim 1 is known from JP H08-177 692 A. Further four-stroke and two-stroke engines are respectively disclosed in US 7 117 830 B1 and JP 2008 202 545 A.

### Summary of Invention

### Technical Problem

In the two-stroke dual-fuel engine 100 shown in FIG. 5, the premixed combustion is adopted in which the mixture gas of the air A and gaseous fuel supplied into the cylinder liner 1 is compressed by the piston 6, and thereafter the mixture gas is ignited and combusted by injecting liquid fuel into the combustion chamber 10 from the pilot injection valve 12. Accordingly, there is an advantage that the injection pressure of gaseous fuel into the cylinder liner 1 does not have to be higher. However, in order to perform normal combustion, the air-fuel ratio of the mixture gas has to be appropriate. In addition, the air-fuel ratio is the ratio by weight of the air A to the gaseous fuel inside the cylinder liner 1, and generally represents the value of dividing the weight of the air A by the weight of gaseous fuel. However, the ratio by weight used below may be the ratio (air excess ratio) of the mixture ratio (air-fuel ratio) of actual fuel and air supplied to an engine, to the theoretical air-fuel ratio (air-fuel ratio at the time of complete combustion). That is, the ratio by weight used below may represent the value obtained by dividing the air-fuel ratio of mixture gas suctioned into an engine, by the theoretical air-fuel ratio.

As an example, in a case of using LNG as gaseous fuel, the range of the appropriate air-fuel ratio is about 1-2 times the theoretical air-fuel ratio at the time of complete combustion.

However, the weight of the air A flowing in the cylinder liner 1 via the air-retaining part 3 is changed under the influence of the intake air temperature at the supercharger (not shown) disposed in upstream in the air flow direction of the air-retaining part 3, or under the influence of the outlet air temperature at an air cooler to cool the air discharged from the supercharger. Accordingly, in the above-described method of estimating the weight of the air A flowing in the cylinder liner 1 based on the changes of the air pressure inside the air-retaining part 3, the weight of the air A may not be estimated correctly. Thus, there is a possibility that a difference between a target air-fuel ratio and an actual air-fuel ratio occurs, whereby it is difficult to maintain efficient and stable combustion (operation of engine).

The present invention has been made in view of the above circumstances, and aims to provide a two-stroke engine capable of obtaining an appropriate air-fuel ratio at the gas mode operation.

### Solution to Problem

According to the present invention, a two-stroke engine is capable of performing at least a gas mode operation using a flammable gas as a main fuel, and includes a plurality of cylinders, an exhaust valve provided in each of the plurality of cylinders, and an air-fuel ratio controller.

At a time of the gas mode operation, this air-fuel ratio controller has: a function of calculating an average air-fuel ratio inside the plurality of cylinders, and of controlling the average air-fuel ratio by adjusting an air flow volume which is supplied to the plurality of cylinders; and a function of calculating an air-fuel ratio inside each cylinder, and of controlling the air-fuel ratio by adjusting a closing timing of the exhaust valve.

In this case, a gas produced by evaporating LNG may be used as the flammable gas. In addition, at the time of the gas mode operation, the air-fuel ratio controller may adjust the air flow volume which is supplied to the plurality of cylinders so that the calculated average air-fuel ratio is closer to 1.5, and may adjust the closing timing of the exhaust valve so that the calculated air-fuel ratio is within 1.0 to 2.5. The above air-fuel ratio (the above average air-fuel ratio) is the ratio obtained by dividing an air-fuel ratio (general air-fuel ratio) of mixture gas inside the cylinder, by the theoretical air-fuel ratio.

The two-stroke engine in the present invention may further include: exhaust branch pipes connected to the plurality of cylinders; an exhaust main pipe to gather an exhaust released from the plurality of cylinders through the exhaust branch pipes; an exhaust valve actuator to open and close the exhaust valve; an air relief pipe in which an upstream end thereof in an air flow direction is communicated with an air supply pipe to supply air to the plurality of cylinders; an air relief valve installed in the air relief pipe; an exhaust main pipe air-fuel ratio sensor to measure an air-fuel ratio inside the exhaust main pipe; an exhaust branch pipe air-fuel ratio sensor to measure an air-fuel ratio inside each exhaust branch pipe; and a crank angle detection sensor to detect a crank angle.

At the time of the gas mode operation, the air-fuel ratio controller may have: a function of calculating the average air-fuel ratio from a measured value of the exhaust main pipe air-fuel ratio sensor, and of controlling the average air-fuel ratio by adjusting a degree of opening of the air relief valve; and a function of calculating the air-fuel ratio inside each cylinder from a measured value of the exhaust branch pipe air-fuel ratio sensor, and of controlling the air-fuel ratio inside each cylinder by adjusting the closing timing of the exhaust valve by the exhaust valve actuator based on a detected value of the crank angle detection sensor.

The two-stroke engine in the present invention may further include: a supercharger turbine to change an energy of an exhaust gathered in the exhaust main pipe, into rotational motion; and a supercharger blower to be driven by the supercharger turbine, the supercharger blower to pressurize air and to supply the air to the plurality of cylinders.

An upstream end in an air flow direction of the air supply pipe may be communicated with an air outlet of the supercharger blower.

A downstream end in the air flow direction of the air relief pipe may be communicated with an air inlet of the supercharger blower.

A downstream end in the air flow direction of the air relief pipe may be communicated with an exhaust inlet of the supercharger turbine.

### Effects of Invention

According to the two-stroke engine in the present invention, the following excellent effects can be obtained.
(1) At the time of the gas mode operation, the average air-fuel ratio inside the plurality of cylinders is calculated from a measured value of the exhaust main pipe air-fuel ratio sensor, and the average air-fuel ratio is controlled by adjusting the degree of opening of the air relief valve, whereby the air-fuel ratio of the entire engine can be maintained at an appropriate value.
(2) The air-fuel ratio inside each cylinder is calculated from a measured value of the exhaust branch pipe air-fuel ratio sensor, and the air-fuel ratio is controlled by adjusting the closing timing of the exhaust valve by the exhaust valve actuator, whereby the air-fuel ratio of each cylinder can be maintained at an appropriate value.

### Brief Description of Drawings

FIG. 1 is a schematic view of a two-stroke dual-fuel engine in a first embodiment of the present invention.
FIG. 2 is a diagram showing a relationship between opening/closing timings of a scavenging port and opening/closing timings of an exhaust valve, with respect to a crank angle.
FIG. 3 is a diagram showing an air-fuel ratio at a diesel mode operation and a gas mode operation.
FIG. 4 is a schematic view of a two-stroke dual-fuel engine in a second embodiment of the present invention.
FIG. 5 is a schematic view showing an example of two-stroke dual-fuel engines in the related art.

### Description of Embodiments

Embodiments of the present invention are described below with reference to the drawings.

### [First Embodiment]

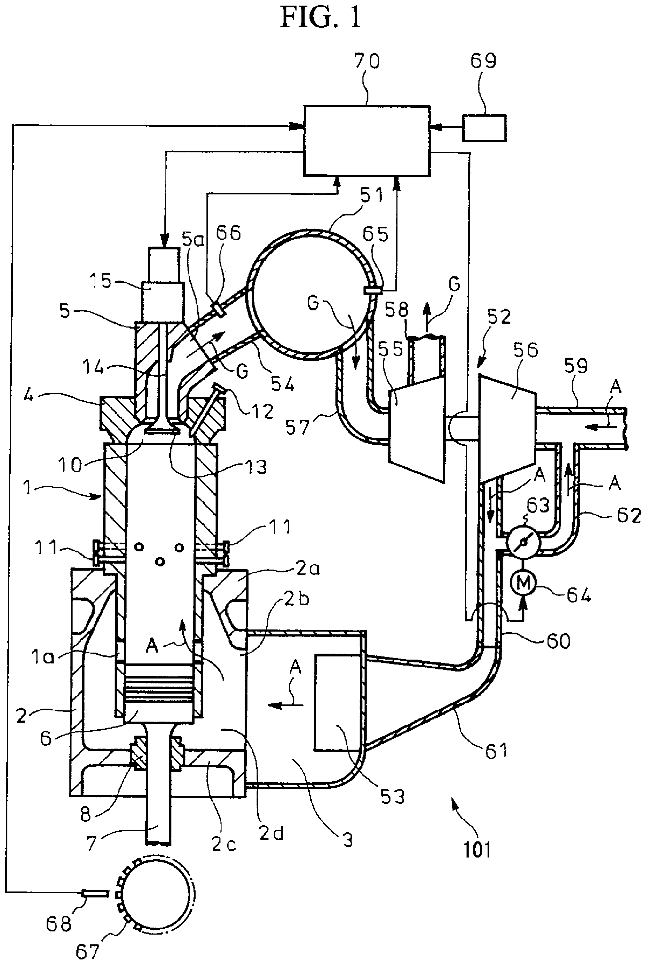

FIG. 1 is a schematic view of a two-stroke dual-fuel engine in a first embodiment of the present invention. In a two-stroke dual-fuel engine 101 (two-stroke engine) in this embodiment, an engine body including a cylinder liner 1, a housing 2, an air-retaining part 3, a cylinder cover 4, an exhaust valve cage 5, a piston 6, a piston rod 7, a stuffing box 8, gas injection valves 11, a pilot injection valve 12, an exhaust valve 13, an exhaust valve rod 14, and an exhaust valve actuator 15 is equivalent to that of the two-stroke dual-fuel engine 100 shown in FIG. 5. In FIG. 1, the same elements as the constituent elements in the two-stroke dual-fuel engine 100 shown in FIG. 5 are denoted by the same reference signs, and descriptions thereof may be omitted.

The configuration of means to supply gaseous fuel to the gas injection valves 11 is similar to a two-stroke dual-fuel engine in the related art. After LNG is suctioned from the LNG tank 16 by the LNG pump 31 in FIG. 5, gaseous fuel evaporated in the evaporator 32 is supplied to the gas injection valves 11 via the pressure-regulating valve 33 and the gas controller 34.

The configuration of means to supply liquid fuel to the pilot injection valve 12 is also similar to a two-stroke dual-fuel engine in the related art. Liquid fuel (heavy oil) suctioned from the liquid fuel tank 22 by the fuel injection pump 21 in FIG. 5 is supplied to the pilot injection valve 12 through the high-pressure fuel pipe 23.

The two-stroke dual-fuel engine 101 shown in FIG. 1 includes a plurality of cylinder liners 1. Each cylinder liner 1 is provided with the exhaust valve cage 5. In addition, the two-stroke dual-fuel engine 101 includes an exhaust main pipe 51 to gather exhaust G transferred from the combustion chamber 10 via the exhaust flow path 5a to the outside thereof, a supercharger 52 to pressurize the air A by using the energy of the exhaust G which has been gathered in the exhaust main pipe 51, and an air cooler 53 to cool the air A which has been pressurized by the supercharger 52.

The exhaust main pipe 51 is an exhaust pipe shared by a plurality of exhaust valve cages 5. The upstream ends in the exhaust flow direction of a plurality of exhaust branch pipes 54 are connected to the exhaust flow paths 5a of the exhaust valve cages 5 respectively. The downstream end in the exhaust flow direction of each exhaust branch pipe 54 is connected to the exhaust main pipe 51.

The supercharger 52 includes a turbine 55 (supercharger turbine) to change the energy of the exhaust G gathered in the exhaust main pipe 51, into rotational motion, and a blower 56 (supercharge blower) driven by the turbine 55 and to pressurize the air A.

The downstream end in the exhaust flow direction of a turbine inlet pipe 57 is connected to the exhaust inlet of the turbine 55, and the upstream end in the exhaust flow direction of the turbine inlet pipe 57 is connected to the exhaust main pipe 51. The upstream end in the exhaust flow direction of a turbine outlet pipe 58 is connected to the exhaust outlet of the turbine 55, and the downstream end in the exhaust flow direction of the turbine outlet pipe 58 is open to the atmosphere through a silencer (not shown).

The downstream end in the air flow direction of a blower inlet pipe 59 is connected to the air inlet of the blower 56, and the upstream end in the air flow direction of the blower inlet pipe 59 is open to the atmosphere through an air filter (not shown). The upstream end in the air flow direction of a blower outlet pipe 60 (air supply pipe) is connected to the air outlet of the blower 56.

The supercharger 52 is configured to secure the air flow volume required at the operation using only liquid fuel (the diesel mode operation) similar to a diesel engine.

The air cooler 53 is disposed inside the air-retaining part 3 so that the air outlet thereof faces to the side of the housing 2. The air inlet of the air cooler 53 and the downstream end in the air flow direction of the blower outlet pipe 60 are connected to each other through an air cooler inlet pipe 61.

A characterized part of the two-stroke dual-fuel engine 101 shown in FIG. 1 is that at the gas mode operation, a part of the air A released from the air outlet of the blower 56 in the supercharger 52 is returned to the air inlet of the blower 56, and the closing timing of the exhaust valve 13 is delayed relative to that at the diesel mode operation, whereby an appropriate air-fuel ratio can be obtained.

The two-stroke dual-fuel engine 101 includes: an air relief pipe 62 in which the upstream end thereof in the air flow direction is communicated with the air outlet of the blower 56 in the supercharger 52, and the downstream end thereof in the air flow direction is communicated with the air inlet of the blower 56 in the supercharger 52; an air relief valve 63 installed in the air relief pipe 62; a motor 64 to drive the valve body of the air relief valve 63 and to adjust the degree of opening thereof; an exhaust main pipe air-fuel ratio sensor 65 to measure the air-fuel ratio inside the exhaust main pipe 51; exhaust branch pipe air-fuel ratio sensors 66 to measure the air-fuel ratios inside the exhaust branch pipes 54 respectively. In addition, the two-stroke dual-fuel engine 101 includes a crank angle detection gear 67 fitted and attached to a crankshaft, a crank angle detection sensor 68 to detect a crank angle from a rotational position of the crank angle detection gear 67 and to output crank angle detection signals, a commanding device 69 to select the gas mode operation or the diesel mode operation, and an air-fuel ratio controller 70.

The commanding device 69 is configured to alternatively output one of diesel mode operation signals and gas mode operation signals, to the air-fuel ratio controller 70.

The air-fuel ratio controller 70 has a function of operating the motor 64 to drive the valve body of the air relief valve 63 thereby closing the exhaust relief valve 63 when receiving the diesel mode operation signals from the commanding device 69, and a function of sending signals to open and close the exhaust valve 13 in the steady state, to the exhaust valve actuator 15, based on a detected value of the crank angle detection sensor 68.

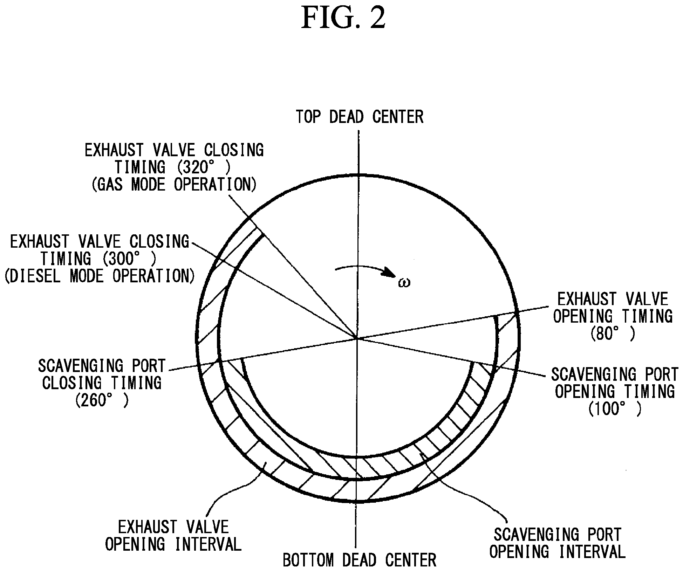

As shown in FIG. 2, the above-described steady state represents a state where the range of 80 to 300° in crank angle from the top dead center of the piston 6 becomes the opening interval of the exhaust valve 13. In addition, in FIG. 2, ω represents the rotational direction of the crankshaft.

The air-fuel ratio controller 70 has a function of calculating an average air-fuel ratio inside the plurality of cylinder liners 1 from a measured value of the exhaust main pipe air-fuel ratio sensor 65 (air-fuel ratio inside the exhaust main pipe 51) by using calculation formulas beforehand obtained by experiment so that the average air-fuel ratio matches the measured value, when receiving the gas mode operation signals from the commanding device 69, and of controlling the above average air-fuel ratio by operating the motor 64 to drive the valve body of the air relief valve 63 thereby adjusting the degree of opening of the air relief valve 63.

Furthermore, the air-fuel ratio controller 70 has a function of calculating an air-fuel ratio inside each cylinder liner 1 from a measured value of each exhaust branch pipe air-fuel ratio sensor 66 (air-fuel ratio inside each exhaust branch pipe 54) by using calculation formulas beforehand obtained by experiment so that the air-fuel ratio matches the measured value, and of controlling the above air-fuel ratio by sending signals to adjust the closing timing of the exhaust valve 13, to the exhaust valve actuator 15, based on a detected value of the crank angle detection sensor 68.

The exhaust main pipe air-fuel ratio sensor 65 or the exhaust branch pipe air-fuel ratio sensor 66 may be a sensor directly measuring an air-fuel ratio, or may be a sensor obtaining data which the air-fuel ratio controller 70 uses to calculate an air-fuel ratio, that is, the sensor measuring an exhaust gas concentration (for example, O₂ concentration) in exhaust gas.

More specifically, the air-fuel ratio controller 70 has a function of calculating an average air-fuel ratio inside the plurality of cylinder liners 1 from a measured value of the exhaust main pipe air-fuel ratio sensor 65 by using calculation formulas beforehand obtained by experiment so that the average air-fuel ratio matches the measured value, when receiving the gas mode operation signals from the commanding device 69, and of operating the motor 64 to drive the valve body of the air relief valve 63 thereby adjusting the degree of opening of the air relief valve 63 so that the average air-fuel ratio is closer to 1.5.

Furthermore, the air-fuel ratio controller 70 has a function of calculating an air-fuel ratio inside each cylinder liner 1 from a measured value of each exhaust branch pipe air-fuel ratio sensor 66 by using calculation formulas beforehand obtained by experiment so that the air-fuel ratio matches the measured value, and of sending signals to adjust the closing timing of the exhaust valve 13, to the exhaust valve actuator 15, based on a detected value of the crank angle detection sensor 68, so that the air-fuel ratio is within 1.0 to 2.5.

The above air-fuel ratio (the above average air-fuel ratio) is the ratio (air excess ratio) obtained by dividing an air-fuel ratio (general air-fuel ratio) of mixture gas inside the cylinder liner 1, by the theoretical air-fuel ratio. That is, in order to suitably control the air-fuel ratio (general air-fuel ratio) inside the cylinder liner 1, the air excess ratio is used as the controlled object.

As shown in FIG. 2, at either of the diesel mode operation and the gas mode operation, the opening interval of the scavenging ports 1a is the range of 100 to 260° in crank angle from the top dead center of the piston 6.

At the diesel mode operation, the opening interval of the exhaust valve 13 is the range of 80 to 300° in crank angle from the top dead center of the piston 6. In addition, at the gas mode operation, the closing timing of the exhaust valve 13 is set by the exhaust valve actuator 15 at up to 320° in crank angle, and the opening interval of the exhaust valve 13 is more expanded than that at the diesel mode operation.

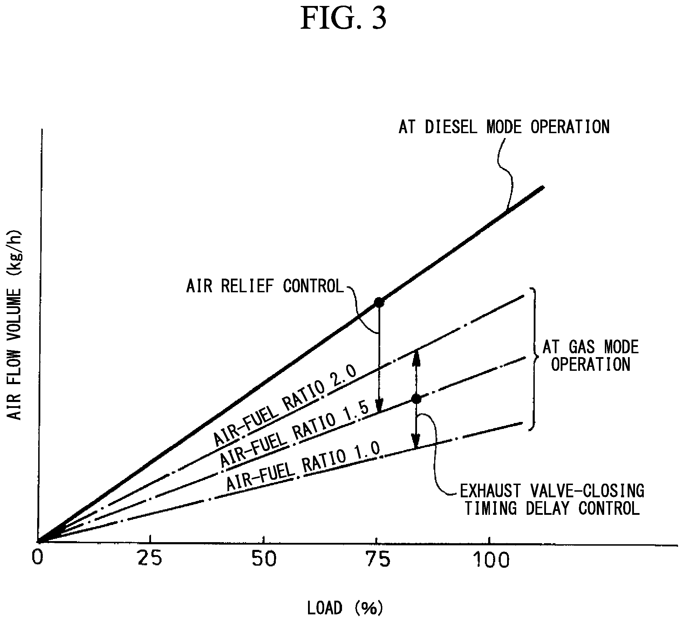

FIG. 3 is a diagram showing an air flow volume relative to a load in an air-fuel ratio at the diesel mode operation, and an air flow volume relative to a load in an air-fuel ratio at the gas mode operation. The air-fuel ratio at the gas mode operation is set in the range of 1.0 to 2.5 which is lower than the air-fuel ratio at the diesel mode operation.

Next, the operation of the two-stroke dual-fuel engine 101 shown in FIG. 1 is described below.

When the diesel mode operation signals are sent from the commanding device 69, the air-fuel ratio controller 70 operates the motor 64 to drive the valve body of the air relief valve 63, thereby closing the air relief valve 63. Thereby, all the air A released from the blower 56 of the supercharger 52 flows into the cylinder liner 1 from the air-retaining part 3 via the housing 2.

Furthermore, when liquid fuel is injected to the combustion chamber 10 from the pilot injection valve 12, as shown in FIG. 3, the air-fuel ratio at the diesel mode operation becomes higher than the range of 1.0 to 2.5 of the air-fuel ratio at the gas mode operation.

The air-fuel ratio controller 70 sends signals to the exhaust valve actuator 15 based on a detected value of the crank angle detection sensor 68, and as shown in FIG. 2, controls the exhaust valve 13 to open in the range of 80 to 300° in crank angle from the top dead center of the piston 6.

When the gas mode operation signals are sent from the commanding device 69, the air-fuel ratio controller 70 calculates an average air-fuel ratio inside the plurality of cylinder liners 1 from a measured value of the exhaust main pipe air-fuel ratio sensor 65 (air-fuel ratio inside the exhaust main pipe 51) by using calculation formulas beforehand obtained by experiment so that the average air-fuel ratio matches the measured value, and operates the motor 64 to drive the valve body of the air relief valve 63, thereby expanding the degree of opening of the air relief valve 63 so that the average air-fuel ratio is closer to 1.5.

When the degree of opening of the air relief valve 63 is expanded, though a part of the air A released from the blower 56 of the supercharger 52 flows in the cylinder liner 1 from the air-retaining part 3 via the housing 2, the other part of the air A returns to the air inlet of the blower 56 via the air relief pipe 62. Consequently, as shown in FIG. 3, "air relief control" in which the operation mode thereof is switched from the diesel mode operation to the gas mode operation aiming at 1.5 average air-fuel ratio is performed. That is, the flow volume of the air A flowing in each cylinder liner 1 is decreased, whereby the air-fuel ratio in the entire engine can be dropped.

Even when the calculated average air-fuel ratio inside the plurality of cylinder liners 1 is 1.5, in one of the plurality of cylinder liners 1, the air-fuel ratio thereof may exceed 2.5 as the upper limit of the air-fuel ratio at the gas mode operation.

Therefore, the air-fuel ratio controller 70 calculates an air-fuel ratio inside each cylinder liner 1 from a measured value of each exhaust branch pipe air-fuel ratio sensor 66 (air-fuel ratio inside each exhaust branch pipe 54) by using calculation formulas beforehand obtained by experiment so that the air-fuel ratio matches the measured value, and sends signals to delay the closing timing of the exhaust valve 13, to the exhaust valve actuator 15,based on a detected value of the crank angle detection sensor 68, thereby discharging a part of the air A to the outside of the cylinder liner 1 via the exhaust flow path 5a so that the air-fuel ratio is within 1.0 to 2.5.

When the calculated air-fuel ratio inside the specific cylinder liner 1 exceeds 2.5, as shown in FIG. 2, the closing timing of the exhaust valve 13 is set at up to 320° in crank angle, thereby expanding the opening interval of the exhaust valve 13. That is, as shown in FIG. 3, "exhaust valve-closing timing delay control" in which the calculated air-fuel ratio inside each cylinder liner 1 is set within 1.0 to 2.5 is performed, whereby the air-fuel ratio inside each cylinder liner 1 can be maintained at an appropriate value.

Furthermore, in a case where the engine load is changed by disturbance, when performing only the above "air relief control", the time to obtain an appropriate air-fuel ratio may become longer (responsiveness is low), but by performing the above "exhaust valve-closing timing delay control", the time to obtain an appropriate air-fuel ratio can be shortened (responsiveness is high).

In a case where the exhaust main pipe air-fuel ratio sensor 65 is broken, the appropriate air-fuel ratio inside each cylinder liner 1 can be obtained by using only the exhaust branch pipe air-fuel ratio sensors 66.

### [Second Embodiment]

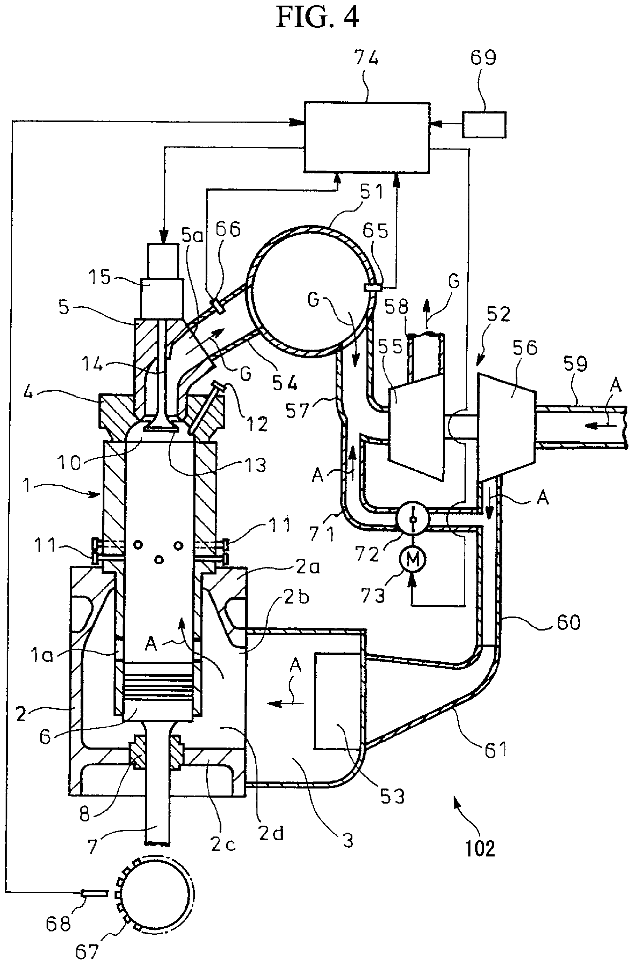

FIG. 4 is a schematic view of a two-stroke dual-fuel engine in a second embodiment of the present invention. In a two-stroke dual-fuel engine 102 (two-stroke engine) in this embodiment, an engine body including a cylinder liner 1, a housing 2, an air-retaining part 3, a cylinder cover 4, an exhaust valve cage 5, a piston 6, a piston rod 7, a stuffing box 8, gas injection valves 11, a pilot injection valve 12, an exhaust valve 13, an exhaust valve rod 14, and an exhaust valve actuator 15 is equivalent to that of the two-stroke dual-fuel engine 100 shown in FIG. 5. In FIG. 4, the same elements as the constituent elements in the two-stroke dual-fuel engine 100 shown in FIG. 5 or the two-stroke dual-fuel engine 101 shown in FIG. 1 are denoted by the same reference signs, and descriptions thereof may be omitted.

The configuration of means to supply gaseous fuel to the gas injection valves 11 is similar to a two-stroke dual-fuel engine in the related art. After LNG is suctioned from the LNG tank 16 by the LNG pump 31 in FIG. 5, gaseous fuel evaporated in the evaporator 32 is supplied to the gas injection valves 11 via the pressure-regulating valve 33 and the gas controller 34.

The configuration of means to supply liquid fuel to the pilot injection valve 12 is also similar to a two-stroke dual-fuel engine in the related art. Liquid fuel (heavy oil) suctioned from the liquid fuel tank 22 by the fuel injection pump 21 in FIG. 5 is supplied to the pilot injection valve 12 through the high-pressure fuel pipe 23.

An exhaust main pipe 51, exhaust branch pipes 54, a turbine 55 of a supercharger 52, a blower 56 of the supercharger 52, and an air cooler 53 included in the engine body are equivalent to that of the two-stroke dual-fuel engine 101 shown in FIG. 1.

A characterized part of the two-stroke dual-fuel engine 102 shown in FIG. 4 is that at the gas mode operation, part of the air A released from the air outlet of the blower 56 in the supercharger 52 is led to the exhaust inlet (working gas inlet) of the turbine 55 in the same supercharger 52, and the closing timing of the exhaust valve 13 is delayed relative to that at the diesel mode operation, whereby an appropriate air-fuel ratio can be obtained.

The two-stroke dual-fuel engine 102 includes: an air relief pipe 71 in which the upstream end thereof in the air flow direction is communicated with the air outlet of the blower 56 in the supercharger 52, and the downstream end thereof in the air flow direction is communicated with the exhaust inlet (working gas inlet) of the turbine 55 in the supercharger 52; an air relief valve 72 installed in the air relief pipe 71; a motor 73 to drive the valve body of the air relief valve 72 and to adjust the degree of opening thereof; an exhaust main pipe air-fuel ratio sensor 65 to measure the air-fuel ratio inside the exhaust main pipe 51; exhaust branch pipe air-fuel ratio sensors 66 to measure the air-fuel ratios inside the exhaust branch pipes 54 respectively. In addition, the two-stroke dual-fuel engine 102 includes a crank angle detection gear 67 fitted and attached to a crankshaft, a crank angle detection sensor 68 to detect a crank angle from a rotational position of the crank angle detection gear 67 and to output crank angle detection signals, a commanding device 69 to select the gas mode operation or the diesel mode operation, and an air-fuel ratio controller 74.

The commanding device 69 is configured to alternatively output one of diesel mode operation signals and gas mode operation signals, to the air-fuel ratio controller 74.

The air-fuel ratio controller 74 has a function of operating the motor 73 to drive the valve body of the air relief valve 72 thereby closing the exhaust relief valve 72 when receiving the diesel mode operation signals from the commanding device 69, and a function of sending signals to open and close the exhaust valve 13 in the steady state, to the exhaust valve actuator 15, based on a detected value of the crank angle detection sensor 68.

As shown in FIG. 2, the above-described steady state represents a state where the range of 80 to 300° in crank angle from the top dead center of the piston 6 becomes the opening interval of the exhaust valve 13. In addition, in FIG. 2, ω represents the rotational direction of the crankshaft.

The air-fuel ratio controller 74 has a function of calculating an average air-fuel ratio inside the plurality of cylinder liners 1 from a measured value of the exhaust main pipe air-fuel ratio sensor 65 (air-fuel ratio inside the exhaust main pipe 51) by using calculation formulas beforehand obtained by experiment so that the average air-fuel ratio matches the measured value, when receiving the gas mode operation signals from the commanding device 69, and of controlling the above average air-fuel ratio by operating the motor 73 to drive the valve body of the air relief valve 72 thereby adjusting the degree of opening of the air relief valve 72.

Furthermore, the air-fuel ratio controller 74 has a function of calculating an air-fuel ratio inside each cylinder liner 1 from a measured value of each exhaust branch pipe air-fuel ratio sensor 66 (air-fuel ratio inside each exhaust branch pipe 54) by using calculation formulas beforehand obtained by experiment so that the air-fuel ratio matches the measured value, and of controlling the above air-fuel ratio by sending signals to adjust the closing timing of the exhaust valve 13, to the exhaust valve actuator 15, based on a detected value of the crank angle detection sensor 68.

More specifically, the air-fuel ratio controller 74 has a function of calculating an average air-fuel ratio inside the plurality of cylinder liners 1 from a measured value of the exhaust main pipe air-fuel ratio sensor 65 by using calculation formulas beforehand obtained by experiment so that the average air-fuel ratio matches the measured value, when receiving the gas mode operation signals from the commanding device 69, and of operating the motor 73 to drive the valve body of the air relief valve 72 thereby adjusting the degree of opening of the air relief valve 72 so that the average air-fuel ratio is closer to 1.5.

Furthermore, the air-fuel ratio controller 74 has a function of calculating an air-fuel ratio inside each cylinder liner 1 from a measured value of each exhaust branch pipe air-fuel ratio sensor 66 by using calculation formulas beforehand obtained by experiment so that the air-fuel ratio matches the measured value, and of sending signals to adjust the closing timing of the exhaust valve 13, to the exhaust valve actuator 15, based on a detected value of the crank angle detection sensor 68, so that the air-fuel ratio is within 1.0 to 2.5.

The above air-fuel ratio (the above average air-fuel ratio) is the ratio obtained by dividing an air-fuel ratio (general air-fuel ratio) of mixture gas inside the cylinder liner 1, by the theoretical air-fuel ratio.

As shown in FIG. 2, at either of the diesel mode operation and the gas mode operation, the opening interval of the scavenging ports 1a is the range of 100 to 260° in crank angle from the top dead center of the piston 6.

At the diesel mode operation, the opening interval of the exhaust valve 13 is the range of 80 to 300° in crank angle from the top dead center of the piston 6. In addition, at the gas mode operation, the closing timing of the exhaust valve 13 is set by the exhaust valve actuator 15 at up to 320° in crank angle, and the opening interval of the exhaust valve 13 is more expanded than that at the diesel mode operation.

FIG. 3 is a diagram showing an air flow volume relative to a load in an air-fuel ratio at the diesel mode operation, and an air flow volume relative to a load in an air-fuel ratio at the gas mode operation. The air-fuel ratio at the gas mode operation is set in the range of 1.0 to 2.5 which is lower than the air-fuel ratio at the diesel mode operation.

Next, the operation of the two-stroke dual-fuel engine 102 shown in FIG. 4 is described below.

When the diesel mode operation signals are sent from the commanding device 69, the air-fuel ratio controller 74 operates the motor 73 to drive the valve body of the air relief valve 72, thereby closing the air relief valve 72. Thereby, all the air A released from the blower 56 of the supercharger 52 flows into the cylinder liner 1 from the air-retaining part 3 via the housing 2.

Furthermore, when liquid fuel is injected to the combustion chamber 10 from the pilot injection valve 12, as shown in FIG. 3, the air-fuel ratio at the diesel mode operation becomes higher than the range of 1.0 to 2.5 of the air-fuel ratio at the gas mode operation.

The air-fuel ratio controller 74 sends signals to the exhaust valve actuator 15 based on a detected value of the crank angle detection sensor 68, and as shown in FIG. 2, controls the exhaust valve 13 to open in the range of 80 to 300° in crank angle from the top dead center of the piston 6.

When the gas mode operation signals are sent from the commanding device 69, the air-fuel ratio controller 74 calculates an average air-fuel ratio inside the plurality of cylinder liners 1 from a measured value of the exhaust main pipe air-fuel ratio sensor 65 (air-fuel ratio inside the exhaust main pipe 51) by using calculation formulas beforehand obtained by experiment so that the average air-fuel ratio matches the measured value, and operates the motor 73 to drive the valve body of the air relief valve 72, thereby expanding the degree of opening of the air relief valve 72 so that the average air-fuel ratio is closer to 1.5.

When the degree of opening of the air relief valve 72 is expanded, though part of the air A released from the blower 56 of the supercharger 52 flows in the cylinder liner 1 from the air-retaining part 3 via the housing 2, the other part of the air A is led to the exhaust inlet (working gas inlet) of the turbine 55 via the air relief pipe 71. Consequently, as shown in FIG. 3, "air relief control" in which the operation mode thereof is switched from the diesel mode operation to the gas mode operation aiming at 1.5 average air-fuel ratio is performed. That is, the flow volume of the air A flowing in each cylinder liner 1 is decreased, whereby the air-fuel ratio in the entire engine can be dropped.

Even when the calculated average air-fuel ratio inside the plurality of cylinder liners 1 is 1.5, in one of the plurality of cylinder liners 1, the air-fuel ratio thereof may exceed 2.5 as the upper limit of the air-fuel ratio at the gas mode operation.

Therefore, the air-fuel ratio controller 74 calculates an air-fuel ratio inside each cylinder liner 1 from a measured value of each exhaust branch pipe air-fuel ratio sensor 66 (air-fuel ratio inside each exhaust branch pipe 54) by using calculation formulas beforehand obtained by experiment so that the air-fuel ratio matches the measured value, and sends signals to delay the closing timing of the exhaust valve 13, to the exhaust valve actuator 15, based on a detected value of the crank angle detection sensor 68, thereby discharging a part of the air A to the outside of the cylinder liner 1 via the exhaust flow path 5a so that the air-fuel ratio is within 1.0 to 2.5.

When the calculated air-fuel ratio inside the specific cylinder liner 1 exceeds 2.5, as shown in FIG. 2, the closing timing of the exhaust valve 13 is set at up to 320° in crank angle, thereby expanding the opening interval of the exhaust valve 13. That is, as shown in FIG. 3, "exhaust valve-closing timing delay control" in which the calculated air-fuel ratio inside each cylinder liner 1 is set within 1.0 to 2.5 is performed, whereby the air-fuel ratio inside each cylinder liner 1 can be maintained at an appropriate value.

Furthermore, in a case where the engine load is changed by disturbance, when performing only the above "air relief control", the time to obtain an appropriate air-fuel ratio may become longer (responsiveness is low), but by performing the above "exhaust valve-closing timing delay control", the time to obtain an appropriate air-fuel ratio can be shortened (responsiveness is high).

In a case where the exhaust main pipe air-fuel ratio sensor 65 is broken, the appropriate air-fuel ratio inside each cylinder liner 1 can be obtained by using only the exhaust branch pipe air-fuel ratio sensors 66.

The two-stroke dual-fuel engine in the present invention is not limited to the embodiments described above, and modifications within the scope of the present invention can be applied thereto.

For example, in the embodiments described above, the two-stroke dual-fuel engine has been described which can selectively perform the gas mode operation using flammable gas as the main fuel, or the diesel mode operation using only liquid fuel as the fuel thereof. However, the present invention can be applied to the two-stroke dual-fuel engine which can perform at least the gas mode operation using flammable gas as the main fuel.

In the embodiments described above, the two-stroke dual-fuel engine is provided with the supercharger, but the configuration having no supercharger can be also adopted. The above air-fuel ratio controller controls the operation of motor thereby adjusting the degree of opening of the air relief valve, but if the air-fuel ratio controller can adjust the air flow volume supplied to the cylinder of engine, other configurations can be also adopted.

In the embodiments described above, LNG is used as flammable gas (gaseous fuel). However, the present invention is not limited to this, and gas having flammability can be used, such as hydrogen gas, hydrocarbon gas (methane, ethane, ethylene, propane, butane or the like), alcohol-based gaseous fuel.

In a case where gas other than LNG is used as flammable gas, the control method of the air-fuel ratio controller can be changed suitably. In the embodiments described above, the air-fuel ratio controller adjusts the degree of opening of the air relief valve so that the calculated average air-fuel ratio is closer to 1.5, and adjusts the closing timing of the exhaust valve by the exhaust valve actuator so that the calculated air-fuel ratio is within 1.0 to 2.5. However, the control target value of the above average air-fuel ratio or the above air-fuel ratio can be suitably changed in accordance with the used flammable gas.

In the embodiments described above, the air-fuel ratio controller expands the degree of opening of the air relief valve so that the calculated average air-fuel ratio is closer to a specific value, but may control so as to reduce the degree of opening of the air relief valve in accordance with the used flammable gas. In addition, the air-fuel ratio controller delays the closing timing of the exhaust valve by the exhaust valve actuator so that the calculated air-fuel ratio is in a specific range, but may control so as to advance the closing timing of the exhaust valve in accordance with the used flammable gas.

In the embodiments described above, the downstream end in the air flow direction of the air relief pipe is connected to the air inlet of the supercharger blower or the exhaust inlet of the supercharger turbine. However, the downstream end in the air flow direction of the air relief pipe does not always have to be connected to the supercharger blower or the supercharger turbine, and for example, the downstream end in the air flow direction of the air relief pipe may be open to the atmosphere. Part of the air discharged from the supercharger is released to the outside of engine through the air relief pipe, whereby the air flow volume supplied to the cylinder is decreased, and the air-fuel ratio inside the cylinder can be adjusted.

In the embodiments described above, the crank angle detection sensor to output the crank angle detection signals detects a crank angle from the rotational position of the crank angle detection gear fitted and attached to the crankshaft. However, the present invention is not limited to this, and a crank angle may be detected from the rotational position of the crankshaft, the position of piston or the like.

Heavy oil is used as liquid fuel injected by the pilot injection valve, but other liquid fuel having flammability may be used.

### Industrial Applicability

The two-stroke dual-fuel engine in the present invention can be applied to the two-stroke dual-fuel engine which can perform at least the gas mode operation using flammable gas as the main fuel.

### Description of Reference Signs

- 1: Cylinder liner (cylinder)
- 13: Exhaust valve
- 15: Exhaust valve actuator
- 51: Exhaust main pipe
- 52: Supercharger
- 54: Exhaust branch pipe
- 55: Turbine (supercharger turbine)
- 56: Blower (supercharger blower)
- 60: Blower outlet pipe (air supply pipe)
- 62: Air relief pipe
- 63: Air relief valve
- 65: Exhaust main pipe air-fuel ratio sensor
- 66: Exhaust branch pipe air-fuel ratio sensor
- 68: Crank angle detection sensor
- 70: Air-fuel ratio controller
- 71: Air relief pipe
- 72: Air relief valve
- 74: Air-fuel ratio controller
- 101: Two-stroke dual-fuel engine (two-stroke engine)
- 102: Two-stroke dual-fuel engine (two-stroke engine)
- A: Air
- G: Exhaust

## Claims

1. A two-stroke engine (101; 102) capable of performing at least a gas mode operation using a flammable gas as a main fuel, the two-stroke engine (101) comprising:
a plurality of cylinders (1); **characterized by**
an exhaust valve (13) provided in each of the plurality of cylinders (1); and
an air-fuel ratio controller (70; 74),
wherein the air-fuel ratio controller (70; 74) at a time of the gas mode operation has
a function of calculating an average air-fuel ratio inside the plurality of cylinders (1), and of controlling the average air-fuel ratio by adjusting an air flow volume which is supplied to the plurality of cylinders (1), and
a function of calculating an air-fuel ratio inside each cylinder (1), and of controlling the air-fuel ratio by adjusting a closing timing of the exhaust valve (13).

2. The two-stroke engine (101; 102) according to Claim 1, wherein
a gas evaporated of LNG is used as the flammable gas, and
the air-fuel ratio controller (70; 74) at the time of the gas mode operation adjusts the air flow volume which is supplied to the plurality of cylinders (1) so that the calculated average air-fuel ratio is closer to 1.5, and adjusts the closing timing of the exhaust valve (13) so that the calculated air-fuel ratio is within 1.0 to 2.5.

3. The two-stroke engine (101; 102) according to Claim 1, further comprising:
exhaust branch pipes (54) connected to the plurality of cylinders (1);
an exhaust main pipe (51) to gather an exhaust released from the plurality of cylinders (1) through the exhaust branch pipes (54);
an exhaust valve actuator (15) to open and close the exhaust valve (13);
an air relief pipe (62; 71) in which an upstream end thereof in an air flow direction is communicated with an air supply pipe to supply air to the plurality of cylinders (1);
an air relief valve (63; 72) installed in the air relief pipe (62; 71);
an exhaust main pipe air-fuel ratio sensor (65) to measure an air-fuel ratio inside the exhaust main pipe (51);
an exhaust branch pipe air-fuel ratio sensor (66) to measure an air-fuel ratio inside each exhaust branch pipe (54); and
a crank angle detection sensor (68) to detect a crank angle,
wherein the air-fuel ratio controller (70; 74) at the time of the gas mode operation has
a function of calculating the average air-fuel ratio from a measured value of the exhaust main pipe air-fuel ratio sensor (65), and of controlling the average air-fuel ratio by adjusting a degree of opening of the air relief valve (63), and
a function of calculating the air-fuel ratio inside each cylinder (1) from a measured value of the exhaust branch pipe air-fuel ratio sensor (60), and of controlling the air-fuel ratio inside each cylinder (1) by adjusting the closing timing of the exhaust valve (13) by the exhaust valve actuator (15) based on a detected value of the crank angle detection sensor (68).

4. The two-stroke engine (101; 102) according to Claim 3, further comprising:
a supercharger turbine (55) to change an energy of an exhaust gathered in the exhaust main pipe (51), into rotational motion; and
a supercharger blower (56) to be driven by the supercharger turbine (55), the supercharger blower (56) to pressurize air and to supply the air to the plurality of cylinders (1),
wherein an upstream end in an air flow direction of the air supply pipe (60) is communicated with an air outlet of the supercharger blower (56).

5. The two-stroke engine (101) according to Claim 4, wherein
a downstream end in the air flow direction of the air relief pipe (62) is communicated with an air inlet of the supercharger blower (56).

6. The two-stroke engine (102) according to Claim 4, wherein
a downstream end in the air flow direction of the air relief pipe (71) is communicated with an exhaust inlet of the supercharger turbine (55).

## Patentansprüche

1. Zweitaktmotor (101; 102), der in der Lage ist, mindestens einen Gasmodusbetrieb unter Verwendung eines brennbaren Gases als ein Hauptkraftstoff durchzuführen, wobei der Zweitaktmotor (101):
eine Vielzahl von Zylindern (1) aufweist; **gekennzeichnet durch**
ein Abgasventil (13), das in jedem der Vielzahl von Zylindern (1) vorgesehen ist; und
eine Luft-Kraftstoff-Verhältnis-Steuerungseinrichtung (70; 74),
wobei die Luft-Kraftstoff-Verhältnis-Steuerungseinrichtung (70; 74) zu einer Zeit des Gasmodusbetriebs
eine Funktion zum Berechnen eines durchschnittlichen Luft-Kraftstoff-Verhältnisses innerhalb der Vielzahl von Zylindern (1) und zum Steuern des durchschnittlichen Luft-Kraftstoff-Verhältnisses durch Einstellen eines Luftstromvolumens, welches der Vielzahl von Zylindern (1) zugeführt wird, und
eine Funktion zum Berechnen eines Luft-Kraftstoff-Verhältnisses innerhalb jedes Zylinders (1) und zum Steuern des Luft-Kraftstoff-Verhältnisses durch Einstellen einer Schließzeitabstimmung des Abgasventils (13) hat.

2. Zweitaktmotor (101; 102) nach Anspruch 1, wobei
ein vom LNG verdampftes Gas als das brennbare Gas verwendet wird, und
die Luft-Kraftstoff-Verhältnis-Steuerungseinrichtung (70; 74) zu der Zeit des Gasmodusbetriebs das Luftstromvolumen, welches der Vielzahl von Zylindern (1) zugeführt wird, einstellt, sodass das berechnete durchschnittliche Luft-Kraftstoff-Verhältnis näher an 1,5 liegt, und die Schließzeitabstimmung des Abgasventils (13) einstellt, sodass das berechnete Luft-Kraftstoff-Verhältnis zwischen 1,0 bis 2,5 liegt.

3. Zweitaktmotor (101; 102) nach Anspruch 1, ferner mit:
Abgaszweigrohren (54), die mit der Vielzahl von Zylindern (1) verbunden sind;
einem Abgashauptrohr (51), um ein Abgas zu sammeln, das von der Vielzahl von Zylindern (1) durch die Abgaszweigrohre (54) abgegeben wird;
einem Abgasventilstellglied (15), um das Abgasventil (13) zu öffnen und zu schließen;
einem Luftentlastungsrohr (62; 71), in welchem ein in einer Luftströmungsrichtung stromaufwärtiges Ende davon mit einem Luftzufuhrrohr in Verbindung steht, um der Vielzahl von Zylindern (1) Luft zuzuführen;
einem Luftentlastungsventil (63; 72), das in dem Luftentlastungsrohr (62; 71) installiert ist;
einem Abgashauptrohr-Luft-Kraftstoff-Verhältnis-Sensor (65), um ein Luft-Kraftstoff-Verhältnis innerhalb des Abgashauptrohres (51) zu messen;
einem Abgaszweigrohr-Luft-Kraftstoff-Verhältnis-Sensor (66), um ein Luft-Kraftstoff-Verhältnis innerhalb jedes Abgaszweigrohrs (54) zu messen; und
einem Kurbelwellenwinkelerfassungssensor (68), um einen Kurbelwellenwinkel zu erfassen,
wobei die Luft-Kraftstoff-Verhältnis-Steuerungseinrichtung (70; 74) zu der Zeit des Gasmodusbetriebs
eine Funktion zum Berechnen des durchschnittlichen Luft-Kraftstoff-Verhältnisses von einem gemessenen Wert des Abgashauptrohr-Luft-Kraftstoff-Verhältnis-Sensors (65) und zum Steuern des durchschnittlichen Luft-Kraftstoff-Verhältnisses durch Einstellen eines Öffnungsgrads des Luftentlastungsventils (63), und
eine Funktion zum Berechnen des Luft-Kraftstoff-Verhältnisses innerhalb jedes Zylinders (1) von einem gemessenen Wert des Abgaszweigrohr-Luft-Kraftstoff-Verhältnis-Sensors (60) und zum Steuern des Luft-Kraftstoff-Verhältnisses innerhalb jedes Zylinders (1) durch Einstellen der Schließzeitabstimmung des Abgasventils (13) durch das Abgasventilstellglied (15) auf Grundlage eines erfassten Werts des Kurbelwellenwinkelerfassungssensors (68) hat.

4. Zweitaktmotor (101; 102) nach Anspruch 3, ferner mit:
einer Aufladeturbine (55), um eine Energie eines Abgases, das in dem Abgashauptrohr (51) gesammelt wird, in Drehbewegung umzuwandeln; und
einem Aufladegebläse (56), das durch die Aufladeturbine (55) anzutreiben ist, wobei das Aufladegebläse (56) dient, Luft mit Druck zu beaufschlagen und die Luft der Vielzahl von Zylindern (1) zuzuführen,
wobei ein in einer Luftströmungsrichtung stromaufwärtiges Ende des Luftzufuhrrohrs (60) mit einem Luftauslass des Aufladegebläses (56) in Verbindung steht.

5. Zweitaktmotor (101) nach Anspruch 4, wobei
ein in der Luftströmungsrichtung stromabwärtiges Ende des Luftentlastungsrohrs (62) mit einem Lufteinlass des Aufladegebläses (56) in Verbindung steht.

6. Zweitaktmotor (102) nach Anspruch 4, wobei
ein stromabwärtiges Ende in der Luftströmungsrichtung des Luftentlastungsrohrs (71) mit einem Abgaseinlass der Aufladeturbine (55) in Verbindung steht.

## Revendications

1. Moteur à deux temps (101 ; 102) capable de réaliser au moins une opération en mode gaz en utilisant un gaz inflammable en tant que combustible principal, le moteur à deux temps (101) comprenant :
une pluralité de cylindres (1) ; **caractérisé par** :
une soupape d'échappement (13) prévue dans chacun de la pluralité de cylindres (1) ; et
un organe de commande de rapport air-combustible (70 ; 74),
dans lequel l'organe de commande de rapport air-combustible (70 ; 74) au moment de l'opération en mode gaz a :
une fonction consistant à calculer un rapport air-combustible moyen à l'intérieur de la pluralité de cylindres (1) et à contrôler le rapport air-combustible moyen en ajustant un volume d'écoulement d'air qui est amené à la pluralité de cylindres (1), et
une fonction consistant à calculer un rapport air-combustible à l'intérieur de chaque cylindre (1) et à contrôler le rapport air-combustible en ajustant un temps de fermeture de la soupape d'échappement (13).

2. Moteur à deux temps (101 ; 102) selon la revendication 1, dans lequel :
un gaz évaporé de LNG est utilisé en tant que gaz inflammable, et
l'organe de commande de rapport air-combustible (70 ; 74) au moment de l'opération en mode gaz ajuste le volume d'écoulement d'air qui est amené à la pluralité de cylindres (1) de sorte que le rapport air-combustible moyen calculé est plus proche de 1,5, et ajuste le temps de fermeture de la soupape d'échappement (13) de sorte que le rapport air-combustible calculé est dans le plage de 1,0 à 2,5.

3. Moteur à deux temps (101 ; 102) selon la revendication 1, comprenant en outre :
des tuyaux de dérivation d'échappement (54) raccordés à la pluralité de cylindres (1) ;
un tuyau principal d'échappement (51) pour collecter un échappement libéré par la pluralité de cylindres (1) par le biais des tuyaux de dérivation d'échappement (54) ;
un actionneur de soupape d'échappement (15) pour ouvrir et fermer la soupape d'échappement (13) ;
un tuyau de décharge d'air (62 ; 71) dans lequel son extrémité en amont dans une direction d'écoulement d'air, communique avec un tuyau d'alimentation en air afin de fournir l'air à la pluralité de cylindres (1) ;
une soupape de décharge d'air (63 ; 72) installée dans le tuyau de décharge d'air (62 ; 71) ;
un capteur de rapport air-combustible de tuyau principal d'échappement (65) pour mesurer un rapport air-combustible à l'intérieur du tuyau principal d'échappement (51) ;
un capteur de rapport air-combustible de tuyau de dérivation d'échappement (66) pour mesurer un rapport air-combustible à l'intérieur de chaque tuyau de dérivation d'échappement (54) ; et
un capteur de détection de position de vilebrequin (68) pour détecter une position de vilebrequin,
dans lequel l'organe de commande de rapport air-combustible (70 ; 74) au moment de l'opération en mode gaz a :
une fonction consistant à calculer le rapport air-combustible moyen à partir d'une valeur mesurée du capteur de rapport air-combustible de tuyau principal d'échappement (65), et contrôler le rapport air-combustible moyen en ajustant un degré d'ouverture de la soupape de décharge d'air (63), et
une fonction consistant à calculer le rapport air-combustible à l'intérieur de chaque cylindre (1) à partir d'une valeur mesurée du capteur de rapport air-combustible de tuyau de dérivation d'échappement (60), et contrôler le rapport air-combustible à l'intérieur de chaque cylindre (1) en ajustant le temps de fermeture de la soupape d'échappement (13) par l'actionneur de soupape d'échappement (15) sur la base d'une valeur détectée du capteur de détection de position de vilebrequin (68).

4. Moteur à deux temps (101 ; 102) selon la revendication 3, comprenant en outre :
une turbine de compresseur d'alimentation (55) pour modifier une énergie d'un échappement collecté dans le tuyau principal d'échappement (51), en mouvement de rotation ; et
une soufflante de compresseur d'alimentation (56) destinée à être entraînée par la turbine de compresseur d'alimentation (55), la soufflante de compresseur d'alimentation (56) étant prévue pour mettre l'air sous pression et amener l'air à la pluralité de cylindres (1),
dans lequel une extrémité en amont dans la direction d'écoulement d'air du tuyau d'alimentation en air (60) communique avec une sortie d'air de la soufflante de compresseur d'alimentation (56).

5. Moteur à deux temps (101) selon la revendication 4, dans lequel :
une extrémité en aval dans la direction d'écoulement d'air du tuyau de décharge d'air (62) communique avec une entrée d'air de la soufflante de compresseur de d'alimentation (56).

6. Moteur à deux temps (102) selon la revendication 4, dans lequel :
une extrémité en aval dans la direction d'écoulement d'air du tuyau de décharge d'air (71) communique avec une entrée d'échappement de la turbine de compresseur d'alimentation (55).
